# EUROPEAN PATENT APPLICATION

(11) **EP 4 616 706 A1**
(43) Date of publication of application: **17.09.2025**
(21) Application number: 25160555.6
(22) Date of filing: 27.02.2025
(51) Int. Cl.: A01K 1/035, A01K 1/015

(54) **HEATING DEVICE, PARTICULARLY FOR ANIMALS**

(30) Priority: 14.03.2024 IT 202400005680
(71) Applicant: Pet Creation Srl, 31011 Asolo (TV) (IT)
(72) Inventor: PAOLIN, Maria Beatrice, 31011 ASOLO TV (IT)
(74) Representative: Modiano, Micaela Nadia

(57) **Abstract**

A heating device (10), particularly for animals, comprising a bag (1), inside which a heating module (11) is placed which in turn comprises:
- a first layer (12), which is at least thermally insulating,
- a second layer (13), which comprises a base (14) from which studs (15) extend which are directed toward the first layer (12) and which define interspaces between them for the laying of
- at least one first electrical cable (16) or at least one heating tube.

## Description

The present invention relates to a heating device, particularly for animals.

Nowadays on the market there are heating devices for animals, such as heated kennels, typically but not exclusively for dogs, the purpose of which is to keep the animal warm.

These kennels are widespread especially in areas characterized by freezing winters or for short-haired breeds, which need an external source of heat to stay warm.

Heated kennels are also beloved by animals that live indoors.

The kennels available nowadays have a heated base constituted by a heated mat, i.e. a mat inside which is an electric wire of suitable resistance which, when powered, heats up and emanates heat owing to the Joule effect, and transmits that heat to the adjacent material and therefore to the animal lying on it. The base can be used for any kind of pet accommodation, be it an outdoor kennel with inner padding or a cot.

Such prior art has a number of drawbacks.

First of all, a heated kennel usually has dimensions and bulk that are such as to occupy considerable space in the environment where it is positioned.

Furthermore, precisely because of the dimensions, it can be difficult to move.

Also, animals like dogs often gnaw on many objects and, among these, they may gnaw on the heated mat with the electrical cable.

Moreover, another drawback is due to the fact that the heated mat, in the event of an overload or a short circuit, can cause fires and electric shocks, endangering the safety of the animal.

The aim of the present invention is to provide a heating device, particularly for animals, which is capable of avoiding the drawbacks of the known art in one or more of the above-mentioned aspects.

Within this aim, an object of the invention is to provide a heating device, particularly for animals, that has smaller dimensions and a smaller bulk than similar, conventional devices.

Another object of the invention is to provide a heating device, particularly for animals, that is more versatile than similar, conventional devices and can be easily transported.

A further object of the invention is to provide a heating device, particularly for animals, that is structurally simpler than similar, conventional devices.

Another object of the invention is to provide a heating device that is safe for animals.

A still further object of the present invention is to overcome the drawbacks of the background art in a manner that is alternative to any existing solutions.

Another object of the invention is to provide a heating device, particularly for animals, that is highly reliable, easy to implement and at low cost.

This aim and these and other objects which will become better apparent hereinafter are achieved by a heating device, particularly for animals, characterized in that it comprises a bag, inside which a heating module is placed which in turn comprises:
- a first layer, which is at least thermally insulating,
- a second layer, which comprises a base from which studs extend which are directed toward said first layer and which define interspaces between them for the laying of
- at least one first electrical cable or at least one heating tube.

Further characteristics and advantages of the invention will become better apparent from the detailed description that follows of a preferred, but not exclusive, embodiment of the heating device, particularly for animals, according to the invention, which is illustrated by way of non-limiting example in the accompanying drawings wherein:
- Figure 1 shows the heating device, particularly for animals, according to the invention, with the heating module partially extracted,
- Figure 2 is a cross-sectional side view of the device in Figure 1,
- Figure 3 is another, partially cutaway, view of the device of Figure 1, overturned with respect to the view of Figure 1.

With reference to the figures, the heating device, particularly for animals, according to the invention, is generally designated by the reference numeral 10.

In the embodiment shown in the figures, the device 10 has a substantially quadrangular profile.

However, in other variations of embodiment, not shown in the figures, the device 10 has a different profile, for example circular and/or oval and/or triangular.

The device 10 comprises a bag 1, inside which a heating module 11 is placed.

The heating module 11 in turn comprises:
- a first layer 12, which is at least thermally insulating,
- a second layer 13, which comprises a base 14 from which studs 15 extend which are directed toward the first layer 12 and which define interspaces between them for the laying of
- at least one first electrical cable 16 or at least one heating tube.

In this specific case, the heating module 11 has a first heating electrical cable 16, which is distributed in a sinuous line on the base 14 of the second layer 13 and is held in the interspaces by the side walls of the studs 15.

One end of the first cable 16 protrudes from the perimeter of the second layer 13 with a portion thereof 25, and is conveniently associated with a connector 26 (a plug) for connection to the mains electricity supply.

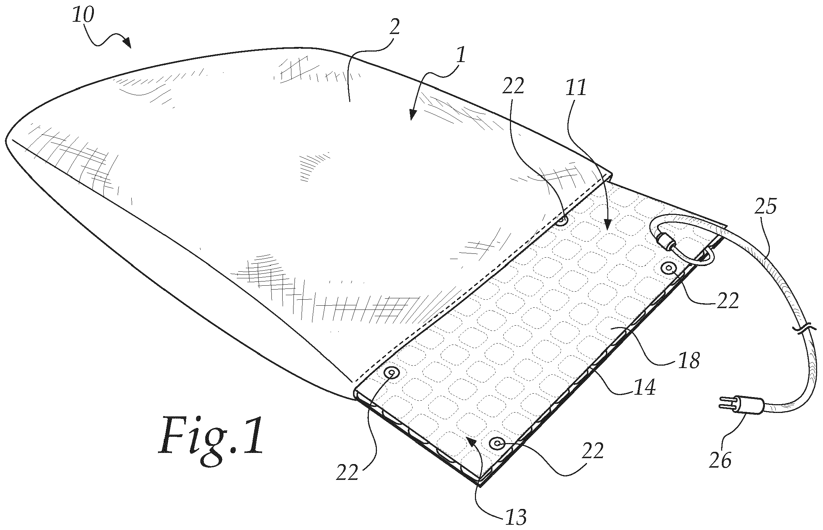

The first cable 16, in the portion that protrudes from the perimeter of the second layer 13, is folded over onto the second layer 13 or onto its side and at an isolated region, for example on the corner of the second layer 13 as shown in Figure 1.

The second cable 25, for connecting to the mains electricity supply, is conveniently covered with bite-resistant material of conventional type, consisting for example of a sheath of self-extinguishing PVC (polyvinyl chloride) covered with braided galvanized steel wire, and further covered with the same material with which the outside of the bag 1 is made, for example fabric and/or non-woven fabric.

In this manner, the part of the cable that protrudes from the structure for connecting to the mains electricity supply does not constitute a source of danger for the animal.

Alternatively, the second cable 25 can be covered with a corrugated polyamide sheath, or with a smooth sheath made of plastic material, for example of CR (polychloroprene) and a covering of fabric.

The two layers, first layer 12 and second layer 13, are joined together by means of rivets 22.

The second layer 13 is conventional and comprises a contoured membrane 17 made of plastic material, in particular preferably of polypropylene, and a sheet 18 of non-woven fabric applied to the base 14 on the side that is opposite to the one with the studs 15.

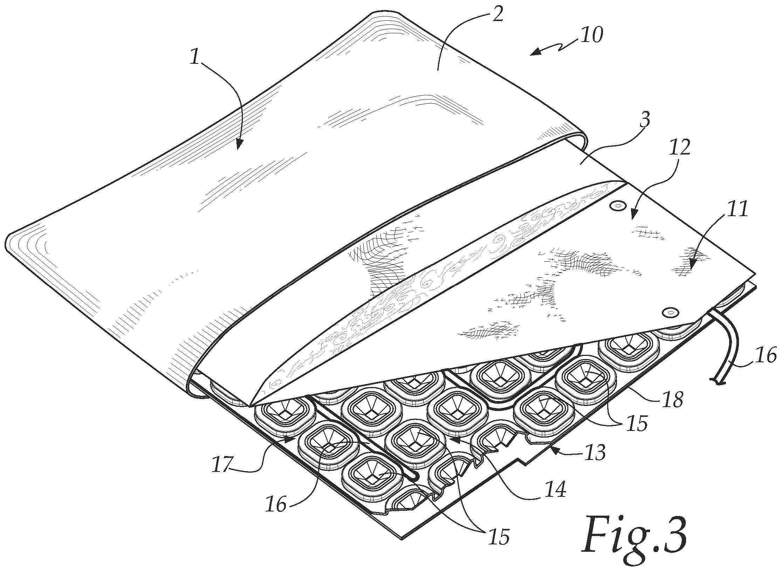

The second layer 13 is clearly visible in Figure 3. In particular, the base 14 from which the studs 15 extend and the way in which the first cable 16 is positioned between such studs 15 can both be clearly seen. The first cable 16 traces a path such that it is capable of ensuring a uniform distribution of heat on the surface of the module 11.

The material of which the membrane 17 is made makes it elastically deformable and for this reason the first cable 16 can be easily inserted between the studs 15, and is held in place by their side walls, which have adapted undercuts.

The first cable 16 can also be easily held in place by clips, not shown in the figures, for fixing to the base of the membrane 17.

As mentioned, the heating module 11 also comprises a first layer 12, which is at least thermally insulating.

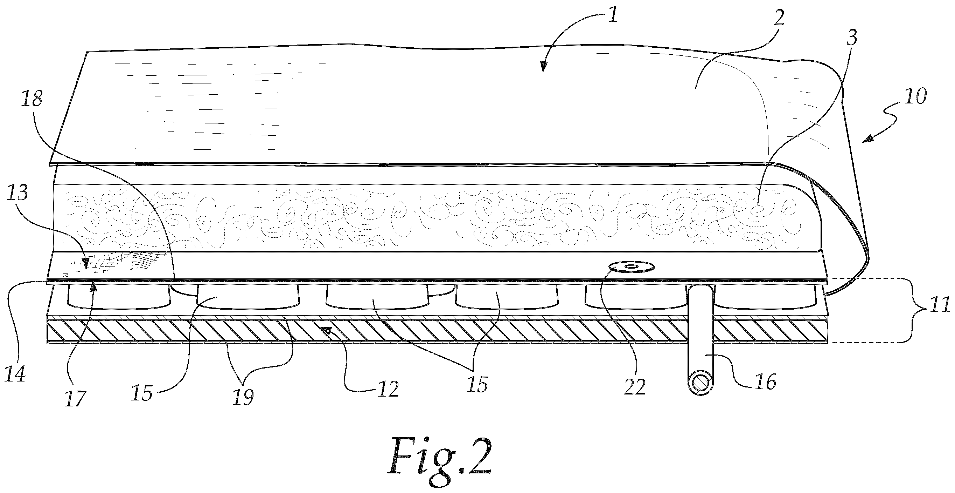

This is preferably made of high-density extruded polystyrene and is also preferably provided on both sides of an impermeable membrane 19 (indicated in Figure 2) made of plastic material, preferably of epoxy resin.

The bag 1 comprises a fabric covering 2 that can vary in color and type.

The fabrics used in the covering 2 are preferably bio-innovative.

In fact 100% natural fibers of plant origin are preferably used.

In some embodiments, 100% natural fireproof fibers of plant origin can be used.

The device 10 also comprises a padding 3 made of antibacterial material such as for example the material known with the trade name "SILVER COOLMAX", comprising fibers rich in silver ions, made by the Ugoflex Manufactory located in Bassano del Grappa, Vicenza, or the material known with the trade name "PYROTEX MEDIC" made by the German company PyroTex Industries GmbH, located in Hamburg.

Such padding 3 is at least partially interposed between the covering 2 and the heating module 11.

The padding 3 determines a soft and comfortable resting surface for the animal.

Preferably the padding 3 is interposed at least between the covering 2 and the second layer 13.

Advantageously, the padding 3 is integral with the covering 2 and is associated with the latter by stitching.

Such bag 1 has an opening, not shown in the figures, for example along one of its perimetric sides, which is adapted to allow the introduction/removal of the heating module 11, if needed or for cleaning/maintenance.

Such opening is recloseable via reversible closure means such as a zipper and/or hook/slot means (Velcro^{®}), not shown in the figures.

The operation of the device 10, according to the invention, is evident from the foregoing description and explanation and, in particular, it is evident that the user, simply by connecting the plug 26 of the second cable 25 to the house mains electricity supply, can make a heated bedding surface available to the animal, with a pleasant warmth distributed over the entire surface of the device.

It should be noted that the first layer 12 thermally insulates the device 10, at least partially, so preventing loss of heat from the first cable 16 to the floor.

It should also be noted that the heating module 11 can be easily extracted from the bag 1, which is therefore washable when necessary, if the covering 2 and the padding 3 are washable.

It should also be noted that the heating module 11, being stowed in the bag 1, is inaccessible to the animal, further ensuring the safety of the animal using the device 10.

It should be noted that the device 10 offers reduced bulk and small dimensions, and is easily transportable.

It should also be noted that such a device retains warmth without sudden changes in temperature.

In this manner they can be used to replace maternal heat in puppy farms, when weaning the puppies.

In practice it has been found that the invention fully achieves the intended aim and objects by providing a heating device, particularly for animals, that has smaller dimensions and a smaller bulk than similar, conventional devices.

With the invention a heating device, particularly for animals, is provided that is more versatile than similar, conventional devices and can be easily transported.

Furthermore, with the invention a heating device, particularly for animals, is provided that is structurally simpler than similar, conventional devices.

Also, with the invention a heating device is provided which is safe for animals.

The invention thus conceived is susceptible of numerous modifications and variations, all of which are within the scope of the appended claims. Moreover, all the details may be substituted by other, technically equivalent elements.

In practice the materials employed, provided they are compatible with the specific use, and the contingent dimensions and shapes, may be any according to requirements and to the state of the art.

The disclosures in Italian Patent Application No. 102024000005680 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A heating device (10), particularly for animals, **characterized in that** it comprises a bag (1), inside which a heating module (11) is placed which in turn comprises:
- a first layer (12), which is at least thermally insulating,
- a second layer (13), which comprises a base (14) from which studs (15) extend which are directed toward said first layer (12) and which define interspaces between them for the laying of
- at least one first electrical cable (16) or at least one heating tube.

2. The device (10) according to claim 1, **characterized in that** said first layer (12) and said second layer (13) are joined together by means of rivets (22).

3. The device (10) according to claim 1, **characterized in that** said at least one first electrical cable (16) is distributed in a sinuous line on said base (14) and is retained in said interspaces by the lateral walls of said studs (15).

4. The device (10) according to claim 1, **characterized in that** one end of said first electrical cable (16) protrudes from the perimeter of said second layer (13), with a portion thereof (25), and is associated with a connector (26) for connection to the mains electricity supply.

5. The device (10) according to claim 1, **characterized in that** said second layer (13) comprises a contoured membrane (17) made of plastic material.

6. The device (10) according to claim 1, **characterized in that** said second layer (13) comprises a sheet (18) of non-woven fabric applied to said base (14) on the side that is opposite to the one with said studs (15).

7. The device (10) according to claim 1, **characterized in that** said first layer (12) is made of high-density extruded polystyrene.

8. The device (10) according to claim 1, **characterized in that** said bag (1) comprises a fabric covering (2).

9. The device (10) according to claim 1, **characterized in that** it comprises a padding (3) at least partially interposed between said covering (2) and said heating module (11), said padding (3) being interposed at least between said covering (2) and said second layer (13).

10. The device (10) according to claim 1, **characterized in that** said bag (1) has an opening for the insertion/removal of said heating module (11).
